# EUROPÄISCHE PATENTSCHRIFT

(11) **EP 2 750 269 B1**
(45) Veröffentlichungstag und Bekanntmachung des Hinweises auf die Patenterteilung: **01.03.2017**
(21) Anmeldenummer: 12199519.5
(22) Anmeldetag: 27.12.2012
(51) Int. Cl.: F04D 13/06, H02K 11/30, H02K 5/22

(54) **Pumpenaggregat**
Pump power unit
Groupe motopompe

(43) Veröffentlichungstag der Anmeldung: 02.07.2014
(73) Patentinhaber: Grundfos Holding A/S, 8850 Bjerringbro (DK)
(72) Erfinder: Loader, Carl Edward, 8000 Aarhus C (DK); Bøglund, Christian Wind, 8000 Aarhus C (DK); Poulsen, Brian Lundsted, 8870 Langå (DK); Danielsen, Carl-Christian, 8550 Ryomgård (DK)
(74) Vertreter: Patentanwälte Vollmann & Hemmer

(56) Entgegenhaltungen:
- WO-A1-2008/019818
- DE-A1-102007 022 070
- FR-A- 1 532 766

## Beschreibung

Die Erfindung betrifft ein Pumpenaggregat mit den im Oberbegriff des Anspruchs 1 angegebenen Merkmalen. Pumpenaggregate, beispielsweise Umwälzpumpenaggregate, weisen in der Regel ein Motor- bzw. Statorgehäuse auf, in welchem ein Elektromotor angeordnet ist, welcher ein in einem Pumpengehäuse angeordnetes Laufrad drehend antreibt. Elektrische Anschlüsse sowie elektrische und elektronische Bauteile zur Steuerung des Elektromotors sind üblicherweise in einem Klemmenkasten bzw. Elektronikgehäuse angeordnet, welcher mit dem Statorgehäuse verbunden ist. Dabei ist es bekannt, ein solches Elektronikgehäuse entweder in Richtung der Drehachse gesehen axialseitig oder radialseitig an dem Statorgehäuse anzuordnen.

Zur Befestigung wird üblicherweise ein Bodenteil des Elektronikgehäuses mit dem Statorgehäuse verschraubt. Anschließend wird das Elektronikgehäuse, ggf. nach Montage der elektrischen und elektronischen Bauteile im Inneren, durch einen Deckel verschlossen.

Diese Ausgestaltung hat den Nachteil, dass die Montage des Elektronikgehäuses recht zeitaufwendig ist und darüber hinaus bei der Montage die Gefahr besteht, dass elektronische Komponenten beschädigt werden.

DE 10 2007 022 070 A1 offenbart einen Elektromotor eines Kreiselpumpenaggregates, an welchem radial an der Außenseite eines Statorgehäuses ein Elektronikgehäuse angeordnet ist. Dieses ist über eine Rastverbindung mit dem Statorgehäuse verbunden und zusätzlich durch einen in axialer Richtung, d. h. parallel zur Drehachse des Motors verschiebbares Schieberelement gesichert.

WO 2008/019818 A1 offenbart eine Statoranordnung für ein Pumpenaggregat, bei welcher der Stator im Inneren des Statorgehäuses über einen Verriegelungsstift fixiert ist.

FR 1 532 766 A offenbart ein Umwälzpumpenaggregat, bei welchem das Statorgehäuse durch einen verschraubten topfförmigen Deckel verschlossen ist.

Es ist Aufgabe der Erfindung, ein Pumpenaggregat dahingehend zu verbessern, dass ein Elektronikgehäuse an dem Statorgehäuse auf einfache Weise spielfrei fixiert werden kann und gleichzeitig die Gefahr von Beschädigungen an elektronischen Bauteilen im Inneren des Elektronikgehäuses minimiert wird.

Das erfindungsgemäße Pumpenaggregat wird durch Anspruch 1 definiert und weist einen Elektromotor auf, welcher ein Statorgehäuse aufweist, in welchem der Stator angeordnet ist. Innerhalb des Stators ist in bekannter Weise ein Rotor, beispielsweise ein Permanentmagnetrotor drehend gelagert, welcher zumindest ein Laufrad einer Pumpe antreibt. Außen am Statorgehäuse ist bei dem erfindungsgemäßen Pumpenaggregat ein Elektronikgehäuse befestigt, welches als ein von dem Statorgehäuse getrenntes separates Bauteil ausgebildet ist. Die Befestigung ist erfindungsgemäß derart ausgestaltet, dass an dem Statorgehäuse eine Ausnehmung ausgebildet ist, welche sich quer zu der Fügerichtung, in welcher das Elektronikgehäuse an das Statorgehäuse angesetzt, bzw. montiert wird, erstreckt. So bildet die Ausnehmung eine Hinterschneidung in der Fügerichtung, welche von einem Verriegelungselement in Form eines Verriegelungsschiebers hintergriffen werden kann, um so das Elektronikgehäuse an dem Statorgehäuse zu befestigen. Hierzu weist das Elektronikgehäuse eine Führung auf und der Verriegelungsschieber durchgreift die Führung und die Ausnehmung. Dazu liegen die Ausnehmung und die Führung vorzugsweise so, dass sie einander zumindest teilweise überdecken bzw. zumindest teilweise miteinander derart fluchten, dass der Verriegelungsschieber gleichzeitig die Führung und die Ausnehmung durchgreifen kann. Dabei kommt der Verriegelungsschieber hinter der beschriebenen Hinterschneidung der Ausnehmung zu liegen bzw. tritt formschlüssig mit der Ausnehmung in
Eingriff, sodass das Elektronikgehäuse nicht in der Fügerichtung von dem Statorgehäuse getrennt werden kann. Wenn der Verriegelungsschieber aus der Führung entnommen ist, tritt der Verriegelungsschieber mit der Ausnehmung und damit der Hinterschneidung außer Eingriff und das Elektronikgehäuse kann in der Fügerichtung von dem Statorgehäuse abgenommen werden.

Die Ausnehmung kann als eine quer zur Fügerichtung geöffnete Nut oder ähnlich geformte Hinterschneidung ausgebildet sein oder aber als eine Öffnung ausgebildet sein. Dabei kann die Öffnung eine geschlossene Umfangswandung aufweisen. In die Öffnung wird der Verriegelungsschieber zur form- und/oder kraftschlüssigen Verbindung zwischen Elektronikgehäuse und Statorgehäuse bevorzugt quer zur Fügerichtung eingeschoben.

Der Verriegelungsschieber wird zur Verbindung zwischen Elektronikgehäuse und Statorgehäuse in einer Richtung quer zur Fügerichtung in die Führung und die Ausnehmung eingeschoben. Dabei ist die Führung so ausgestaltet, dass der Verriegelungsschieber nur in einer definierten Einschubrichtung in der Führung bewegbar ist. So kann durch die Führung sichergestellt werden, dass der Verriegelungsschieber mit der Ausnehmung in Eingriff tritt und von dieser nur durch Bewegung in der definierten Fügerichtung außer Eingriff treten kann. Gemäß einer besonders bevorzugten Ausführungsform kann die Einschubbewegung in der Einschubrichtung noch durch eine Drehung des Verriegelungsschiebers ergänzt werden, durch welche dieser mit der Ausnehmung bzw. Öffnung in Eingriff tritt.

Der Verriegelungsschieber kann einen runden, eckigen oder anderen geeigneten Querschnitt aufweisen. So kann der Verriegelungsschieber als ein flacher Schieber ausgebildet sein. Durch die Führung in dem Elektronikgehäuse wird sichergestellt, dass der Verriegelungsschieber sich nicht quer zu seiner Einsetzrichtung, in welcher er in die Ausnehmung bzw. Öffnung an dem Statorgehäuse eingesetzt ist, bewegen kann. So wird der Verriegelungsschieber sicher derart geführt oder gehalten, dass er vorzugsweise nur in seiner Längs- bzw. Einsetzrichtung bewegbar ist. Ferner sind das Elektronikgehäuse und das Statorgehäuse vorzugsweise so ausgestaltet, dass sie, wenn sie in der Fügerichtung aneinander angesetzt sind, in einer Richtung quer zur Fügerichtung nicht gegeneinander bewegbar sind. Dies kann beispielsweise dadurch geschehen, dass ein axiales Endes des Statorgehäuses in eine korrespondierend geformte Einbuchtung oder Vertiefung an der dem Statorgehäuse zugewandten Seite des Elektronikgehäuses formschlüssig eingreift.

Die erfindungsgemäße Verwendung eines Verriegelungsschiebers, welcher seitlich in das Elektronikgehäuse, d. h. quer zu einer Fügerichtung, in welcher das Elektronikgehäuse mit dem Stator verbunden wird, in die Führung des Elektronikgehäuses eingeschoben wird, hat den Vorteil, dass keine das Elektronikgehäuse in dieser Fügerichtung durchgreifende Befestigungselemente benötigt werden. So ist es insbesondere nicht erforderlich, dass Befestigungselemente den dem Statorgehäuse entgegengesetzten Deckel bzw. eine dem Statorgehäuse entgegengesetzte Außenseite des Elektronikgehäuses durchgreifen müssen, sodass diese Außenseite vollständig für Bedien- und/oder Anzeigeelemente zur Verfügung steht.

Vorzugsweise ist das Elektronikgehäuse axial an dem Statorgehäuse angeordnet. So ist das Elektronikgehäuse stirnseitig auf das Statorgehäuse aufgesetzt. Das Statorgehäuse weist bevorzugt einen im Wesentlichen runden Querschnitt auf. Das Elektronikgehäuse kann an einer dem Statorgehäuse zugewandten Seite, d. h. insbesondere am Boden eine korrespondierend geformte Einbuchtung oder Aufnahme aufweisen, in welche das Statorgehäuse mit seinem Axialende formschlüssig eingreift, so dass eine radiale Verschiebung des Elektronikgehäuses an dem Statorgehäuse verhindert wird.

Gemäß der Erfindung ist der Verriegelungsschieber, wenn er in die Führung und die Ausnehmung bzw. die Öffnung eingesetzt ist, zwischen einer gelösten Position und einer verriegelten Position, vorzugsweise drehend, bewegbar, wobei zumindest in der verriegelten Position das Elektronikgehäuse mit dem Statorgehäuse verspannt ist. So sind die Ausnehmung und der Verriegelungsschieber so angeordnet, dass durch die Bewegung des Verriegelungsschiebers in die Verriegelungsposition eine Bewegung des Elektronikgehäuses in Fügerichtung relativ zu dem Statorgehäuse bewirkt wird. Wenn das Elektronikgehäuse axialseitig an das Statorgehäuse angesetzt wird, ist die Fügerichtung vorzugsweise ebenfalls in axialer Richtung bezogen auf die Längs- bzw. Drehachse des Pumpenaggregates gelegen. Der Verriegelungsschieber und die Ausnehmung sowie die Führung sind dann bevorzugt so ausgestaltet, dass durch Bewegung des Verriegelungsschiebers von der gelösten in die Verriegelungsposition, vorzugsweise durch Drehung des Verriegelungsschiebers das Elektronikgehäuse in axialer Richtung relativ zu dem Stator so bewegt wird, dass es auf den Stator zu bewegt wird und gegen die Axialseite des Stators gepresst wird, sodass es fest an der Axialseite des Stators anliegt. So wird eine spielfreie Verbindung zwischen Stator und Elektronikgehäuse geschaffen. Die axiale Bewegung kann beispielsweise durch Ausgestaltung des Verriegelungsschiebers nach Art eines Exzenters erreicht werden. Alternativ könnte der Verriegelungsschieber beispielsweise als Keilelement ausgebildet sein, wobei bei axialer Bewegung des Verriegelungsschiebers gleichzeitig eine Bewegung zwischen Statorgehäuse und Elektronikgehäuse in deren Fügerichtung erreicht werden kann.

Vorzugsweise ist der Verriegelungsschieber als Stift, insbesondere als drehbarer Stift ausgebildet. Ein solcher Stift kann vorzugsweise in Richtung seiner Längsachse in eine Richtung quer zur Fügerichtung zwischen Stator- und Elektronikgehäuse in die Führung in dem Elektronikgehäuse eingeschoben werden, sodass er mit der Ausnehmung an dem Statorgehäuse in Eingriff tritt. Zusätzlich kann er drehbar sein, um das Ineingrifftreten mit der Ausnehmung zu bewirken oder nach dem Ineingrifftreten mit der Ausnehmung bzw. Öffnung beispielsweise über eine exzentrische Ausgestaltung, wie vorangehend beschrieben, Verspannung bzw. axiale Verlagerung zwischen Statorgehäuse und Elektronikgehäuse zu bewirken.

Vorzugsweise ist ein erstes axiales Stück des Stiftes exzentrisch zu einem zweiten axialen Teilstück ausgebildet. Wenn ein so ausgebildeter Stift um die Längsachse eines seiner Teilstücke gedreht wird, kann über das andere Teilstift eine axiale Verlagerung erreicht werden. Bevorzugt wird der Stift um die Längsachse des zweiten axialen Teilstückes gedreht, sodass sich das erste axiale Teilstück in radialer Richtung quer zur Drehachse des Stiftes aufgrund seiner Exzentrizität verlagert.

Bevorzugt greift das erste axiale Teilstück des Stiftes in die Ausnehmung im Statorgehäuse und greift das zweite axiale Teilstück in die Führung im Elektronikgehäuse ein. Dabei ist das zweite axiale Teilstück bevorzugt in der Führung im Elektronikgehäuse drehbar gelagert. In der gelösten Position des Stiftes ist dieser so gedreht, dass eine Anlagefläche des ersten axialen Teilstückes nicht oder kraftfrei an eine Innenfläche der Ausnehmung bzw. Öffnung anliegt. Wenn nun der Stift in der Führung um seine Längsachse bzw. die Längsachse des zweiten axialen Teilstücks in die verriegelte Position gedreht wird, wird das erste, exzentrisch zu dem zweiten axialen Teilstück angeordnete Teilstück so gedreht, dass ein Abschnitt mit größerem Radius bezogen auf die Drehachse des Stiftes mit der Innenfläche der Öffnung bzw.

Ausnehmung in Kontakt kommt, sodass eine Kraft auf die Innenwandung der Ausnehmung übertragen wird bzw. die Innenwandung der Ausnehmung mit der Ausnehmung in axialer Richtung relativ zu der Führung und damit zu dem Elektronikgehäuse bewegt wird. So lässt sich durch die exzentrische Ausgestaltung des Stiftes bei Drehung des Stiftes die Ausnehmung an dem Statorgehäuse und damit das Statorgehäuse in radialer Richtung bezogen auf die Drehrichtung des Stiftes zu der Führung bewegen. Wenn sich der Stift quer zur Längs- bzw. Drehachse des Pumpenaggregates, vorzugsweise normal zur Längsachse erstreckt, wird dabei das Elektronikgehäuse in axialer Richtung zu dem Statorgehäuse bewegt und kann gegen die axiale Stirnseite des Statorgehäuses gedrückt werden.

Weiter bevorzugt weist der Stift ein drittes axiales Teilstück auf, welches konzentrisch zu dem zweiten axialen Teilstück, und damit ebenfalls exzentrisch zu dem ersten axialen Teilstück ausgebildet ist, wobei das erste axiale Teilstück zwischen dem zweiten und dem dritten axialen Teilstück gelegen ist und das dritte axiale Teilstück vorzugsweise in die Führung in dem Elektronikgehäuse eingreift. Dies bewirkt, dass der Stift an beiden Seiten seines exzentrisch angeordneten ersten axialen Teilstückes drehend in der Führung in dem Elektronikgehäuse gelagert sein kann. So wird ein Kipp- bzw. Biegemoment auf den Stift quer zu seiner Drehrichtung minimiert, da eine Lagerung des Stiftes an beiden Seiten des ersten axialen Teilstückes, welches mit der Öffnung bzw. Ausnehmung des Statorgehäuses in Eingriff ist, gelagert ist. Um die auftretenden Querkräfte, welche auf den Stift quer zu seiner Längs- bzw. Drehachse wirken, in dem Stift aufnehmen zu können, ist dieser vorzugsweise aus Metall oder einem ausreichend steifen Kunststoffmaterial ausgebildet. Besonders bevorzugt kann der Stift einen Metallkern aufweisen, welcher von einem geformten Kunststoffmantel umgeben ist. Besonders bevorzugt kann der Metallkern in den umgebenden Kunststoffmantel eingegossen sein. Der Kunststoffmantel ist insbesondere so geformt, um die Exzentrizität des ersten axialen Teilstückes auszubilden. Bei solch einer Ausgestaltung kann weiter bevorzugt zumindest eines der axialen Teilstücke, insbesondere das dritte axiale Teilstück direkt von dem Kern des Stiftes ohne Ummantelung gebildet sein. Der Kern ist vorzugsweise kreissymmetrisch bzw. kreiszylindrisch ausgebildet, sodass er drehbar in der Führung, zumindest in einem axialen Teilstück gelagert werden kann. In einem anderen axialen Teilstück, beispielsweise dem zweiten axialen Teilstück, kann der Kern von einem konzentrisch zu dem Kern ausgebildeten zylindrischen Mantel aus Kunststoff umgeben sein.

Gemäß einer weiteren bevorzugten Ausführungsform kann der Stift ein Gewinde aufweisen, welches in ein Gewinde im Elektronikgehäuse eingreift. Auf diese Weise kann durch Drehung des Stiftes der Stift in dem Gewinde gleichzeitig in axialer Richtung bezogen auf seine Drehachse gesichert werden, sodass er sich in axialer Richtung nicht ohne Drehung aus der Führung heraus bewegen kann. So kann ein unbeabsichtigtes Lösen des Stiftes verhindert werden.

Zweckmäßigerweise weist der Stift, vorzugsweise an einem Axialende, ein Eingriffsmittel für zumindest ein Werkzeug auf, wobei das Eingriffsmittel vorzugsweise derart ausgestaltet ist, dass es einer Drehmomentübertragung ausschließlich in einer Drehrichtung zulässt. Das Eingriffsmittel kann beispielsweise als Innensechskant oder in anderer Weise wie bekannte Schraubenköpfe ausgestaltet sein. Wenn das Eingriffsmittel so ausgestaltet ist, dass eine Drehmomentübertragung nur in eine Drehrichtung möglich ist, so ist dies die Drehrichtung, in welcher der Stift von seiner gelösten Position in die verriegelte Position gedreht werden muss. Eine Drehung in entgegengesetzter Richtung wird verhindert, so dass der Stift nicht wieder in die gelöste Position zurückgedreht werden kann. So kann das Elektronikgehäuse mit Hilfe des Stiftes unlösbar an dem Statorgehäuse verriegelt werden. Eine solche Ausgestaltung ist beispielsweise in der Weise möglich, dass das Eingriffsmittel so ausgebildet ist, dass es Anlage- bzw. Kraftübertragungsflächen nur in einer Drehrichtung aufweist und in der entgegengesetzten Richtung z. B. sich schräg bzw. geneigt zur Drehrichtung erstreckende Flächen aufweist, welche ein Abgleiten des Werkzeuges in axialer Richtung bewirken.

Weiter bevorzugt ist der Stift zumindest in einem axialen Teilstück gegenüber einem angrenzenden axialen Teilstück radial verjüngt. Insbesondere ist das erste axiale Teilstück, welches gegenüber dem zweiten axialen Teilstück exzentrisch angeordnet ist, vorzugsweise gegenüber dem zweiten axialen Teilstück verjüngt ausgebildet, sodass, wenn der Stift mit dem ersten axialen Teilstück voran, in die Führung und die Öffnung eingeschoben wird, mit seinem ersten axialen Teilstück trotz dessen Exzentrizität die Führung, in welcher nach dem Einsetzen des Stiftes das zweite axiale Teilstück zu liegen kommt, problemlos in Einschubrichtung passieren kann. Vorzugsweise ist die Exzentrizität des ersten axialen Teilstückes dabei so ausgebildet, dass das erste axiale Teilstück an keiner Umfangsseite einen Radius aufweist, welcher größer als der Radius des zweiten axialen Teilstückes bezogen auf die Längs- bzw. Drehachse des Stiftes ist, entlang derer dieser in die Führung und die Öffnung eingeschoben wird. Sofern ein drittes axiales Teilstück vorgesehen ist, wie es vorangehend beschrieben wurde, ist auch dieses bevorzugt verjüngt zu dem zweiten axialen Teilstück und weiter bevorzugt auch zu dem ersten axialen Teilstück ausgebildet, sodass das dritte axiale Teilstück vorzugsweise an jeder Umfangsseite einen Radius aufweist, welcher gleich oder kleiner als der kleinste Radius des exzentrischen ersten Teilstückes bezogen auf die Drehachse des Stiftes ist. So wird sichergestellt, dass beim axialen Einschieben des Stiftes entlang seiner Längsachse das dritte axiale Teilstück die Ausnehmung oder Öffnung in dem Statorgehäuse problemlos passieren kann, bis es in einer Führung in dem Elektronikgehäuse an der entgegengesetzten Seite der Ausnehmung oder Öffnung, führend aufgenommen wird.

Darüber hinaus ist es auch möglich, dass ein Abschnitt des Stiftes oder des Verriegelungselementes sich stetig verjüngt, sodass er eine konische bzw. keilförmige Gestalt annimmt. Mittels einer solchen Ausgestaltung kann bei axialer Verlagerung des Stiftes oder Verriegelungsschiebers in dessen Längsrichtung eine Axialbewegung der Ausnehmung relativ zu der Führung erreicht werden, um, wie oben ausgeführt, das Elektronikgehäuse fest gegen das Statorgehäuse zu drücken

Weiter bevorzugt weist der Stift zumindest zwei unterschiedliche radial verjüngte axiale Teilstücke auf, wobei ein Teilstück exzentrisch zu dem anderen Teilstück angeordnet ist, nämlich, wie vorangehend beschrieben, vorzugsweise das erste axiale Teilstück exzentrisch zu dem zweiten axialen Teilstück und ggf. zu einem dritten axialen Teilstück, welches bevorzugt konzentrisch zu dem zweiten axialen Teilstück gelegen ist, angeordnet ist.

Gemäß einer weiteren bevorzugten Ausführungsform ist zwischen dem Verrieglungsschieber und Elektronikgehäuse an zumindest einer Stelle ein Dichtungsmittel angeordnet. So kann verhindert werden, dass Feuchtigkeit von außen in die Führung des Verriegelungsschiebers eindringt, sodass insbesondere keine Feuchtigkeit in den Bereich zwischen Elektronikgehäuse und Statorgehäuse oder in das Innere des Elektronikgehäuses oder Statorgehäuses eindringen kann, sofern die Führung zu einem oder mehreren dieser Bereiche geöffnet ist.

Gemäß einer weiteren bevorzugten Ausführungsform ist zumindest ein Arretierungsmittel vorhanden, welches den Verriegelungsschieber in der verriegelten Position arretiert, wobei das Arretierungsmittel vorzugsweise zwischen dem Verriegelungsschieber und der Ausnehmung angeordnet ist. Alternativ oder zusätzlich kann ein Arretierungsmittel zwischen dem Verriegelungsschieber und der Führung an dem Elektronikgehäuse wirken. Das Arretierungsmittel kann kraft- und/oder formschlüssig wirken. So können Rastmittel vorgesehen sein, welche z. B. in einer bestimmten Winkellage rastend mit einem als Stift ausgebildeten Verriegelungsschieber in Eingriff treten. Alternativ kann eine Klemmung erreicht werden. Weiter bevorzugt kann die beschriebene Exzentrizität relativ zu der Ausnehmung bzw. Öffnung so geformt sein, dass bei Drehung des Stiftes in der Ausnehmung bzw. Öffnung ein nach innen gerichteter Vorsprung oder Todpunkt überwunden werden muss, welcher ein Zurückdrehen des Stiftes nur mit größerem Kraftaufwand ermöglicht.

Weiter bevorzugt kann ein Arretierungsmittel in der Weise ausgebildet sein, dass der Verriegelungsschieber in seiner axialen Richtung in der Führung gesichert wird, sodass er nicht unbeabsichtigt in axialer Richtung aus der Führung und damit der Ausnehmung herausrutschen kann. Dies kann beispielsweise auch durch formschlüssigen Eingriff eines Rastmittels, beispielsweise eines Rastvorsprunges, welches in der Führung ausgebildet ist, erfolgen. Ein solcher Rastvorsprung kann in einer Ausnehmung an dem Verriegelungsschieber eingreifen. Alternativ kann ein Vorsprung an dem Verriegelungsschieber ausgebildet sein, welcher in eine Ausnehmung, beispielsweise eine Nut, in der Führung rastend eingreift.

Weiter bevorzugt weist der Verriegelungsschieber eine Ausnehmung auf, wobei vorzugsweise am Rand der Ausnehmung in dem Statorgehäuse ein zu der Ausnehmung formschlüssiger Vorsprung ausgebildet ist. Der formschlüssige Vorsprung kragt zu dem Verriegelungsschieber hin gerichtet von einer Innenwandung der Ausnehmung oder Öffnung in dem Statorgehäuse aus und ist so platziert, dass er dann in die Ausnehmung des Verriegelungsschiebers eintritt, wenn dieser sich in der verriegelten Position befindet. Die Ausnehmung an dem Verriegelungsschieber ist dazu z. B. so angeordnet, dass sie nur in einem begrenzten Umfangsbereich des Verriegelungsschiebers ausgebildet ist, sodass die Ausnehmung nur in einer bestimmten Winkellage des Verriegelungsschiebers um seine Drehachse mit dem Vorsprung an der Öffnung bzw. Ausnehmung des Statorgehäuses in Eingriff tritt. Ferner kann die Ausnehmung an dem Verriegelungsschieber gleichzeitig oder alternativ so ausgebildet sein, dass der eintretende Vorsprung nicht eine Verdrehsicherung des Verriegelungsschiebers bzw. Stiftes, sondern eine Sicherung des Verriegelungsschiebers gegen axiales Verschieben bewirkt. Hierzu weist die Ausnehmung an dem Verriegelungsschieber dann Wandungen auf, welche sich quer zur Längsachse bzw. Bewegungsrichtung des Verriegelungsschiebers erstrecken und so bei axialer Bewegung des Verriegelungsschiebers an dem Vorsprung zur Anlage kommen.

Gemäß einer weiteren bevorzugten Ausführungsform ist die Ausnehmung oder Öffnung an dem Statorgehäuse durch ein, vorzugsweise aus Blech ausgebildetes, Formteil gebildet, welches insbesondere über zumindest eine Schraube mit dem Statorgehäuse verbunden ist. D. h. die Ausnehmung oder Öffnung muss nicht einstückig in dem Statorgehäuse, welches vorzugsweise als Gussbauteil gefertigt ist, ausgebildet sein, sondern kann in einem Formteil gelegen sein oder durch ein Formteil gebildet werden, welches mit dem Statorgehäuse verbunden wird, insbesondere verschraubt wird. Diese Ausgestaltung hat den Vorteil, dass ein solches Formteil an einem Statorgehäuse angebracht werden kann, welches ansonsten für die Befestigung eines Elektronikgehäuses in üblicher Weise mittels Schrauben ausgebildet ist. So kann das Statorgehäuse an der Seite, an welcher das Elektronikgehäuse angesetzt wird, beispielsweise einer Axialseite, Gewindelöcher aufweisen, in welche Schrauben zur Befestigung des Elektronikgehäuses eingreifen können. Anstatt das Elektronikgehäuse hier direkt mit Schrauben zu verschrauben, kann mittels der Schrauben an den Gewindelöchern oder dem zumindest einen Gewindeloch das Formteil zur Ausbildung der Ausnehmung bzw. Öffnung befestigt werden.

Das Formteil kann beispielsweise ebenfalls als Gussbauteil, beispielsweise aus Metall oder Kunststoff, gefertigt sein. Besonders bevorzugt ist das Formteil ein Bügel oder eine Blattfeder. Ein solcher Bügel oder eine solche Blattfeder können beispielsweise bogenförmig ausgebildet sein, wobei der Bogen an seinen beiden Längsenden beispielsweise über Schrauben an dem Statorgehäuse, insbesondere an dessen axialer Stirnseite, befestigt wird. So wird durch die Biegung des Bügels oder der Blattfeder zwischen dem Bügel und dem Statorgehäuse, insbesondere der axialen Stirnseite des Statorgehäuses, eine Ausnehmung bzw. Öffnung geschaffen, welche durch den Verriegelungsschieber, insbesondere in Form eines Stiftes durchgriffen werden kann. Ein solcher Bügel oder eine solche Blattfeder können als Formteil aus Blech kostengünstig ausgebildet werden. Darüber hinaus können sie so geformt werden, dass sie eine Federwirkung aufweisen. Dies kann dazu genutzt werden, das Elektronikgehäuse mit dem Statorgehäuse zu verspannen. Wenn der Verriegelungsschieber bzw. Stift beispielsweise durch seine Exzentrizität gegen eine Innenseite der Öffnung, d. h. vorzugsweise gegen eine dem Statorgehäuse zugewandte Innenfläche des Bügels oder der Blattfeder im Bereich der von dieser gebildeten Öffnung drückt, kann es zu einer axialen Verformung in Richtung der Längsachse des Statorgehäuses des Bügels oder der Blattfeder kommen. Eine solche axiale elastische Verformung bewirkt dann eine Kraft in Richtung auf das Statorgehäuse hin gerichtet, welche als Querkraft auf den Verriegelungsschieber wirkt. Da dieser in der Führung des Elektronikgehäuses gelagert ist, wird dieses gegen die gegenüberliegende Anlagefläche des Statorgehäuses, insbesondere eine axiale Stirnfläche des Statorgehäuses gedrückt.

Wenn zwischen dem Elektronikgehäuse und dem Statorgehäuse zusätzlich noch eine elastische Dichtung angeordnet ist, wird diese bei der axialen Bewegung zwischen Stator- und Elektronikgehäuse dabei in der axialen Richtung gestaucht, sodass zum einen eine dichte Anlage der Dichtung an dem Elektronikgehäuse und/oder an dem Statorgehäuse erreicht wird und gleichzeitig die Dichtung aufgrund ihrer Elastizität eine entgegengesetzt gerichtete Kraft erzeugt, welche ebenfalls dazu beiträgt, das Elektronikgehäuse spielfrei an dem Statorgehäuse zu halten. Eine solche Dichtung kann bevorzugt an das Elektronikgehäuse angegossen sein, insbesondere im Mehrkomponentenspritzguss. Wenn, wie oben beschrieben, an dem Elektronikgehäuse an der dem Statorgehäuse zugewandten Seite eine Ausnehmung bzw. Einbuchtung angeformt ist, in welche die Axialseite des Statorgehäuses formschlüssig eingreifen kann, so ist eine solche Dichtung weiter bevorzugt im Umfangsbereich dieser Ausnehmung oder Einbuchtung angeordnet, sodass sie nahe dem Außenumfang an der axialen Stirnseite des Statorgehäuses oder aber am Außenumfang des Statorgehäuses dichtend zur Anlage kommt.

Das an dem Statorgehäuse angeordnete Formteil zur Ausbildung der Ausnehmung bzw. der Öffnung kann weiter bevorzugt zumindest einen Knick und/oder eine gebogene Stelle aufweisen. So kann ein solches Formteil in Form eines Blechstreifens oder einer Blattfeder beispielsweise mehrfach gewellt oder geknickt sein. Durch die Wellen oder Knicke in dem Formteil, insbesondere wenn dieses aus Blech ausgebildet ist, kann eine verstärkte Federwirkung in axialer Richtung des Statorgehäuses erreicht werden, um eine größere Vorspannkraft zum Verspannen des Elektronikgehäuses an dem Statorgehäuse zu erzeugen.

Gemäß einer weiteren bevorzugten Ausführungsform ist zumindest eine elektrische Verbindung, insbesondere eine elektrische Steckverbindung zwischen Statorgehäuse und Elektronikgehäuse vorgesehen. Diese elektrische Verbindung verbindet die Spulen des Stators mit den elektrischen bzw. elektronischen Bauteilen in dem Elektronikgehäuse. Eine Steckverbindung hat den Vorteil, dass keine aufwendige Montage elektrischer Anschlüsse erforderlich ist. Eine solche Steckverbindung weist vorzugsweise eine Steck- bzw. Verbindungsrichtung auf, welche der Fügerichtung zwischen Stator- und Elektronikgehäuse entspricht. So kann die elektrische Verbindung beim Ansetzen des Elektronikgehäuses an das Statorgehäuse automatisch ohne weitere Montageschritte hergestellt werden.

Gemäß einer besonders bevorzugten Ausführungsform ist an einer dem Statorgehäuse entgegengesetzten Außenfläche des Elektronikgehäuses, insbesondere an einer dem Statorgehäuse entgegengesetzten Außenfläche eines Deckelteils des Elektronikgehäuses ein Bedien- und/oder Anzeigeelement angeordnet, welches in Projektion über dem Statorgehäuse gelegen ist. Bei dem Bedien- und/oder Anzeigeelement kann es sich beispielsweise um ein Display handeln. Dieses ist in axialer Projektion bei axialer Anordnung des Elektronikgehäuses an das Statorgehäuse über der axialen Stirnseite des Statorgehäuses gelegen. Dabei weist das Display vorzugsweise eine Fläche auf, welche den Großteil der axialen Stirnfläche des Statorgehäuses in axialer Projektion überdeckt. Dabei ist das Bedien- und/oder Anzeigeelement vorzugsweise im Zentralbereich bezogen auf die Längsachse des Statorgehäuses angeordnet. Bei radialer Anordnung des Elektronikgehäuses wäre das Bedien- und/oder Anzeigeelement entsprechend in radialer Projektion über dem Statorgehäuse gelegen. Die erfindungsgemäße Verwendung eines seitlich bezogen auf die Fügerichtung in das Elektronikgehäuse eingeschobenen Verriegelungselements hat den Vorteil, dass diese dem Statorgehäuse abgewandte Außenfläche für die Bedien- und/oder Anzeigeelemente frei bleibt. So kann dort insbesondere ein Display angeordnet werden, welches eine Ausdehnung hat, welche den Zentralbereich und im Wesentlichen den Großteil der angrenzenden Außenfläche des Statorgehäuses überdeckt. Durch den Verriegelungsschieber ist es nicht erforderlich, dass sich Befestigungselemente wie Schrauben in diesem Bereich durch die Außenfläche, insbesondere einen Deckel hindurch in das Statorgehäuse erstrecken. So ergeben sich größere Freiheiten bei der Gestaltung der Bedienfläche des Elektronikgehäuses.

Das Elektronikgehäuse weist vorzugsweise ein Bodenteil auf, in welches der Verriegelungsschieber in der vorangehend beschriebenen Weise eingreift. Insbesondere kann die beschriebene Führung in dem Bodenteil ausgebildet sein. Das Bodenteil ist durch ein Deckelteil verschlossen, an welchem bevorzugt, die beschriebenen Bedien- und/oder Anzeigeelemente gelegen sind. Bodenteil und Deckelteil begrenzen einen Innenraum des Elektronikgehäuses, in welchem elektrische und/oder elektronische Bauelemente gelegen sind. Die beschriebene Führung für den Verriegelungsschieber ist vorzugsweise außerhalb dieses Innenraumes gelegen, sodass dieser Innenraum zum Befestigen des Elektronikgehäuses überhaupt nicht tangiert wird. Insbesondere muss das Elektronikgehäuse zum Befestigen nicht geöffnet werden, wodurch eine Beschädigung von Bauelementen im Inneren bei der Befestigung an dem Statorgehäuse vermieden wird.

Die Erfindung ist nachfolgend beispielhaft anhand von in den Zeichnungen dargestellten Ausführungsbeispielen näher erläutert. Es zeigen:
- Fig. 1: eine Explosionsdarstellung einer ersten Ausführungsform eines Elektronikgehäuses und eines Statorgehäuses eines Pumpenaggregats mit einem seitlichen Befestigungselement,
- Fig. 2: eine Draufsicht auf ein Pumpenaggregat mit dem Elektronikgehäuse, gemäß Fig. 1,
- Fig. 3: einen Schnitt des Pumpenaggregats gemäß Fig. 2 längs der Schnittlinie III in Fig. 2,
- Fig. 4: eine Seitenansicht des Pumpenaggregats gemäß Fig. 2 und 3,
- Fig. 5: eine Vorderansicht einer Ausführungsform eines Bügels der ersten Ausführungsform eines Pumpenaggregats gemäß Fig. 1 bis 4,
- Fig. 6: eine perspektivische Ansicht einer weiteren Ausführungsform eines Bügels der ersten Ausführungsform eines Pumpenaggregats gemäß Fig. 1 bis 4.

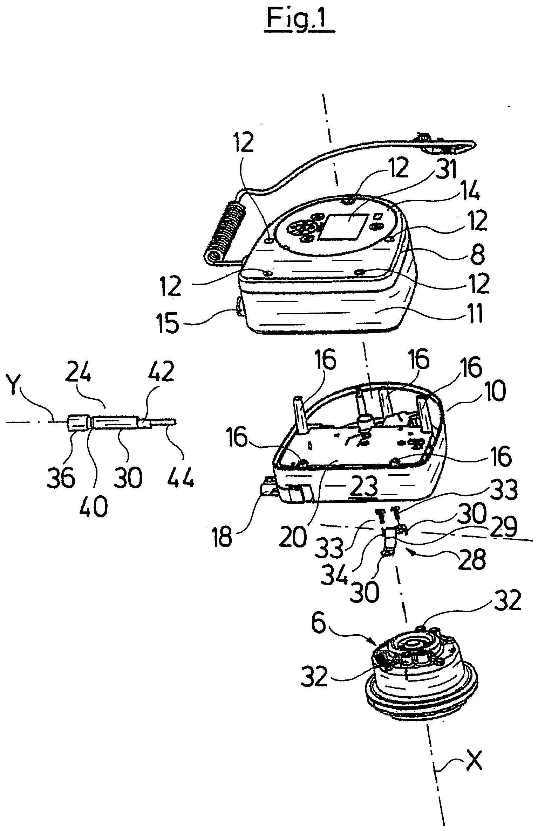

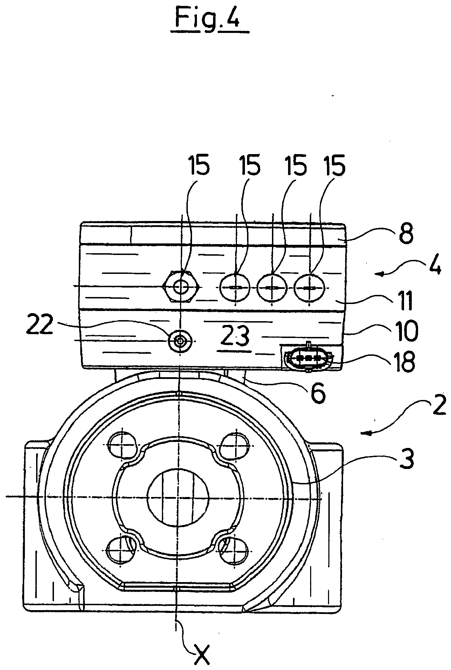

Figuren 1 - 4 zeigen eine erste vorteilhafte Ausführungsform der Erfindung. Das als Umwälzpumpe mit nasslaufendem Elektromotor ausgebildete Pumpenaggregat 2 weist einen Klemmenkasten bzw. ein Elektronikgehäuse 4 auf, welches axial mit einem Statorgehäuse 6 eines Elektromotors verbunden ist. Axial bezieht sich dabei auf die Längs- bzw. Drehachse X des Rotors 5, welcher im Statorgehäuse 6 des Elektromotors angeordnet ist. Den Rotor 5 umgebend ist im Inneren des Statorgehäuses 6 ein mehrere Statorspulen aufweisender Stator 9 angeordnet. Das Statorgehäuse 6 ist an einem Pumpengehäuse 3 des Pumpenaggregats 2 befestigt und der Rotor 5 des Elektromotors ist drehfest mit einem Laufrad 7, welches im Pumpengehäuse 3 angeordnet ist, verbunden. Das Elektronikgehäuse 4 besteht dabei als vormontierte Baugruppe aus einem Deckelteil 8 und einem Bodenteil 10, welche miteinander verschraubt sind. An der axial vom Statorgehäuse 6 abgewandten Oberseite weist das Deckelteil 8 dazu Öffnungen 12 auf, welche entlang des Randes des Deckelteils 8 verteilt angeordnet sind. Das Deckelteil 8 und das Bodenteil 10 sind über die Schrauben 13 miteinander verbunden, wobei die Schrauben 13 durch die Öffnungen 12 des Deckelteils 8 in Befestigungshülsen 16 des Bodenteils 10 innerhalb des Elektronikgehäuses 4 greifen.

An der Oberseite des Deckelteils 8 befindet sich eine Deckfolie 14. Die Deckfolie 14 ist so angeordnet, dass keine der Öffnungen 12 im montierten Zustand des Pumpenaggregats 2 von der Deckfolie 14 verdeckt ist. Dazu ist in diesem Ausführungsbeispiel in der Deckfolie 14 eine Aussparung vorgesehen, welche mit einer der genannten Öffnungen 12 fluchtet, so dass auch diese Öffnung 12 nicht von der Deckfolie 14 überdeckt ist. Die Deckfolie 14 ist vorzugsweise mit dem Deckelteil 8 verklebt.

In dem hier gezeigten Beispiel ist das Elektronikgehäuse 4 dreiteilig ausgebildet, es weist zwischen dem Deckelteil 8 und dem Bodenteil 10 noch ein Zwischenteil 11 auf. Das Zwischenteil 11 weist eine ringförmige Außenwandung auf, welche mit den Außenwandungen umfänglich zur Längsachse X des Bodenteils 10 und des Deckelteils 8 fluchtet. Das Zwischenteil 11 bildet somit eine axiale Verlängerung des Bodenteils 10, um einen größeren Innenraum des Elektronikgehäuses 4 zu schaffen. Das Zwischenteil 11 wird zwischen dem Bodenteil 10 und dem Deckelteil 8 durch die Verschraubung zwischen Deckelteil 8 und Bodenteil 10 mittels der Schrauben 13 fixiert, wobei durch eine entsprechende Kontur an der Umfangswandung gleichzeitig ein formschlüssiger Eingriff erreicht wird, welcher ein Verschieben quer zur Längsachse X des Deckelteils 8, des Zwischenteils 11 und des Bodenteils 10 relativ zueinander verhindert. Um den Innenraum des Elektronikgehäuses 4 abzudichten sind zwischen dem Zwischenteil 11 und dem Deckelteil 8 sowie zwischen dem Zwischenteil 11 und dem Bodenteil 10 bevorzugt umfängliche Dichtungen angeordnet, welche insbesondere an eines oder mehrere dieser Teile direkt angegossen sein können.

An zumindest einer Seitenfläche des Zwischenteils 11 sind vorzugsweise vier Kabeldurchführungen 15 angebracht. Das Bodenteil 10 weist an seiner seitlichen Außenwand zwischen den Kabeldurchführungen 15 und dem Statorgehäuse 6 einen elektrischen Anschluss 18 auf, welcher zum Innenraum des Elektronikgehäuses 4 abgedichtet ist. Der elektrische Anschluss 18 dient der Verbindung mit einer Netzanschlussleitung zur Stromversorgung des Pumpenaggregates. Die Kabeldurchführungen 15 dienen zur Anbindung externer Bauteile, wie beispielsweise Sensoren an die Elektronik im Inneren des Elektronikgehäuses 4. Das Zwischenteil 11 stellt eine optionale Erweiterung des Elektronikgehäuses 4 dar. D. h. das Bodenteil 10 und das Deckelteil 8 sind so ausgebildet, dass sie auch direkt miteinander verbunden werden können, ohne das zwischenliegende Zwischenteil 11. So kann ein kleineres Elektronikgehäuse geschaffen werden, beispielsweise für den Fall, dass weniger elektronische Bauelemente, beispielsweise zur Kommunikation mit externen Bauteilen, wie z. B. Sensoren, in dem Elektronikgehäuse 4 angeordnet werden sollen. So wird ein modularer Aufbau geschaffen, welcher eine optionale Erweiterung des Elektronikgehäuses 4 für zusätzliche Funktionen ermöglicht. Innerhalb des Bodenteils 10 ist zumindest eine Leiterplatte 20 angeordnet. Die Leiterplatte 20 erstreckt sich normal zur Längsachse X, d. h. parallel zu der axialen Außenseite des Deckelteils 8 und dem dem Statorgehäuse 6 zugewandten Boden des Bodenteils 10.

Auf der dem Statorgehäuse 6 zugewandten Unterseite bzw. dem dem Statorgehäuse 6 zugewandten Boden des Bodenteils 10 befindet sich eine Einbuchtung bzw. Vertiefung 21, in welche die dem Elektronikgehäuse 4 zugewandte Axialseite des Statorgehäuses 6 eingreift. So wird ein formschlüssiger Eingriff des Axialendes des Statorgehäuses 6 mit dem Bodenteil 10 im Bereich dessen Vertiefung 21 geschaffen. Dieser formschlüssige Eingriff verhindert ein Verschieben des Elektronikgehäuses 4 quer zur Längsachse X relativ zu dem Statorgehäuse 6.

In dem hier gezeigten Ausführungsbeispiel ist das Elektronikgehäuse 4 durch ein spezielles Befestigungselement in Form eines Verriegelungsschiebers mit dem Statorgehäuse 6 verbunden. In diesem Ausführungsbeispiel ist der Verriegelungsschieber als Verriegelungsstift bzw. Befestigungsstift 24 ausgebildet. Dieser ist quer bzw. normal zur Längsachse X seitlich in das Bodenteil 10 des Elektronikgehäuses 4 eingesetzt. Dazu weist das Elektronikgehäuse 4 an einer Außenwandung bzw. Außenwand 23 eine Öffnung bzw. einen Eingriff 22 auf. Die Außenwand 23 ist an dem Bodenteil 10 ausgebildet und erstreckt sich umfänglich im Wesentlichen parallel zur Längsachse X. Die Längsachse Y des Eingriffs 22 und des Befestigungsstiftes 24 erstreckt sich radial bzw. normal zu der Längsachse X und schneidet diese. Der Eingriff 22 stellt die Öffnung einer Führung 26 im Bodenteil 10 des Elektronikgehäuses 4 dar. Auch die Führung 26 fluchtet mit der Längsachse Y und erstreckt sich somit quer zur Drehachse X des Rotors 5. Die Führung 26 nimmt den Befestigungsstift 24 so auf, dass dieser nur in Richtung seiner Längsachse Y und um diese drehbar in der Führung 26 bewegbar ist. Eine Bewegung quer zur Längsachse Y ist durch die Führung 26 im Wesentlichen ausgeschlossen.

Der Befestigungsstift 24 ist als Befestigungselement innerhalb der Außenkontur des Elektronikgehäuses 4 gelegen. Er steht nach außen nicht über die Außenwand 23, welche die Außenkontur definiert, vor. Durch die seitliche Anbringung ist er von der Außenseite des Elektronikgehäuses 4 auch dann zugänglich, wenn das Elektronikgehäuse 4 geschlossen ist, das heißt wenn das Bodenteil 10 mit dem Deckelteil 8 verschraubt ist.

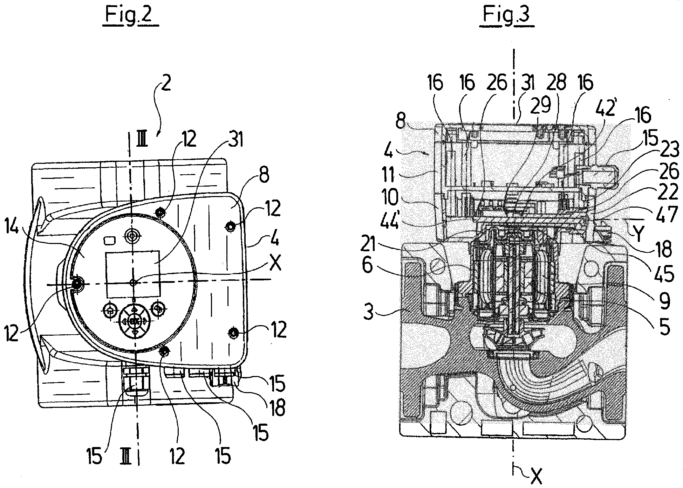

Die Führung 26 für den Befestigungsstift 24 und die Vertiefung 21 im Bodenteil 10 für die Axialseite des Statorgehäuses 6 bilden einen gemeinsamen Freiraum, in welchen ein als Bügel 28 geformtes Blechstück eingreift. Der Bügel 28 ist an dem Statorgehäuse 6 befestigt und definiert bzw. umgibt eine Ausnehmung bzw. Öffnung 29. Diese Öffnung 29 fluchtet, wenn das Elektronikgehäuse 4 in der gezeigten Weise an das Axialende des Statorgehäuses 6 angesetzt ist, mit der Führung 26 in dem Unterteil 10 des Statorgehäuses, so dass der Befestigungsstift 24 seitlich in die Führung 26 eingesetzt und dabei durch die Öffnung 29 geführt werden kann, wie in Fig. 3 gezeigt ist. Zwischen seinen beiden Längsenden ist der Bügel 28 im Profil bogenartig ausgeformt, um die Öffnung 29 zu formen. An seinen beiden Längsenden ist der Bügel 28 so abgewinkelt, dass plane Klemmflächen 30 gebildet werden. Dabei erstrecken sich die Klemmflächen 30 an beiden Längsenden in einer gemeinsamen Ebene normal zur Längsachse X. Die Klemmflächen 30 dienen der Fixierung des Bügels 28 am Statorgehäuse 6 und liegen an Gewindelöchern 32, welche am Statorgehäuse 6 vorzugsweise an der Axialseite ausgeformt sind, an. Die Klemmflächen 30 weisen jeweils ein Loch auf, welches mit einem der Gewindelöcher 32 an dem Statorgehäuse 6 fluchtet. Schrauben 33 greifen durch genannte Löcher in den Längsenden bzw. Klemmflächen 30 des Bügels 28 in die Gewindelöcher 32 des Statorgehäuses 6 ein und verschrauben so den Bügel 28 mit dem Statorgehäuse 6. Die bogenartige Ausformung 34 des Bügels 28 ragt vom Statorgehäuse 6 weg und greift in genannte Ausnehmung 21 im Bodenteil 10 des Elektronikgehäuses 4 im zusammengesetzten Zustand von Statorgehäuse 6 und Elektronikgehäuse 4 ein. Die Ausformung 34 bildet die Ausnehmung bzw. Öffnung 29. Die Öffnung 29 stellt in axialer Richtung X gesehen eine Hinterschneidung dar, welche von dem Verriegelungsschieber in Form des Befestigungsstiftes 24, welcher in der Führung 26 des Bodenteils 10 geführt ist, in axialer Richtung X hintergriffen wird. Wenn der Befestigungsstift 24 in die Führung 26 eingesetzt ist und die Öffnung 29 in dem Bügel 28 durchgreift, ist somit das Elektronikgehäuse 4 in axialer Richtung X an dem Statorgehäuse 6 fixiert.

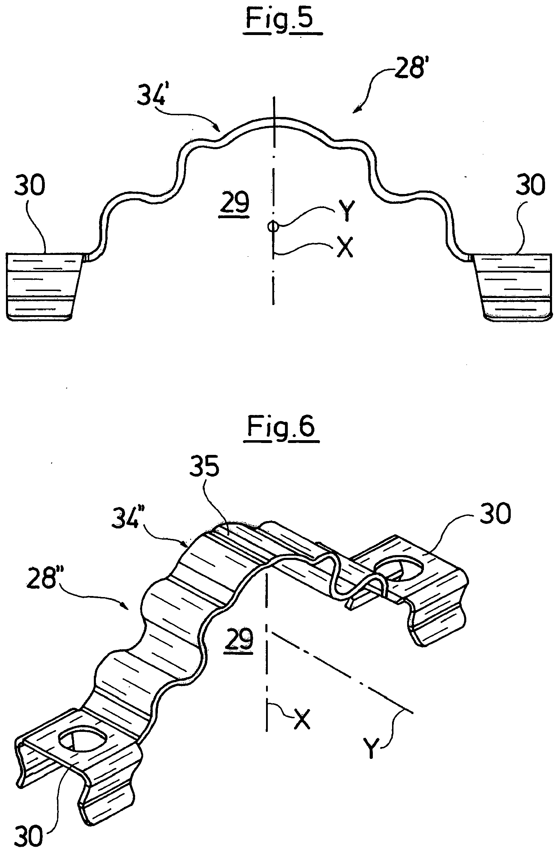

Eine besondere Ausführungsform des Bügels 28' zeigt Fig. 5. Neben der bogenartigen Ausformung 34' des Bügels 28' ist das Blech zusätzlich im Profil derart wellenartig geformt, dass jeweils an den beiden Seitenbögen der Ausformung 34'zwei konvex gekrümmte Kreissegmente über ein konkav gekrümmtes Kreissegment miteinander verbunden sind. Die Ausformung 34' ist angrenzend an ihren Scheitelpunkt rein bogenartig geformt und geht gekrümmt in die im Profil wellenartig verformten Seitenbögen über. Die Übergänge von den Klemmflächen 30 an den Längsenden zu den wellenartig geformten Seitenbögen sind im Profil gerade verlaufende Segmente, welche gekrümmt in die Klemmflächen 30 und am anderen Ende in die wellenartig verformten Seitenbögen übergehen. Die Kreissegmente besitzen dabei unterschiedliche Radien. Alle Übergänge am Bügel 28' sind gekrümmt gestaltet, da an Knickstellen beispielsweise mit weniger Kraftaufwand als in gekrümmten Bereichen ein Bruch entstehen kann. Die wellenartige Form des Bügels 28' verleiht dem Bügel 28' eine Elastizität bzw. federnde Eigenschaften in Richtung der Längsachse X. So kann sich in Richtung der Längsachse X die Ausformung 34' derart verlagern, dass sich der Abstand in der axialen Richtung X von den Klemmflächen 30 vergrößert und somit die von der Ausformung 34' umspannte Ausnehmung 29 vergrößert. Dies kann, wie unten beschrieben wird, dazu genutzt werden, das Elektronikgehäuse 4 kraftschlüssig an der Axialseite des Statorgehäuses 6 in Anlage zu halten.

Eine weitere Ausbildungsform eines Bügels 28" ist in Fig. 6 gezeigt. Sie unterscheidet sich zu der Ausführung in Fig. 5 dadurch, dass entlang der Scheitellinie der bogenartigen Ausformung 24" eine konkave Einbuchtung 35 verläuft. Die Einbuchtung 35 ist zur Außenseite, d. h. der Öffnung 29 abgewandt, geöffnet. Sie bildet eine nach innen in die Öffnung 29 in Richtung der Längsachse X hinein gerichtete Auskragung. Die Einbuchtung 35 ist durch Prägen bzw. Umformen des Bleches, aus welchem der Bügel 28" gebildet ist, geschaffen.

Der Befestigungsstift 24 besteht im Wesentlichen aus vier in Richtung der Längsachse Y aneinander angrenzenden Zylinderstücken, welche sich durch Länge, Durchmesser und Anordnung voneinander unterscheiden. Der Kopfteil 36 des Befestigungsstiftes 24 bildet ein erstes Zylinderstück und zeichnet sich dadurch aus, dass er den größten Durchmesser von allen vorhandenen Zylinderstücken aufweist. An einem der Axialenden des Kopfteils 36 zentrisch entlang der Längsachse Y des Befestigungsstiftes 24 angeordnet befindet sich als zweites Zylinderstück ein erstes Führungsstück 38 mit einem Durchmesser, welcher kleiner ist als der Durchmesser des Kopfteils 36. Angrenzend an das Kopfteil 36 angelagert befindet sich eine umlaufende Nut 40 im ersten Führungsstück 38. In die Nut 40 kann umlaufend eine Dichtung, beispielsweise ein Dichtring, eingreifen, welche Elektronikgehäuse 4 mit Befestigungsstift 24 zumindest spritzwasserdicht abdichtet. An der axialen Stirnfläche des ersten Führungsstückes 38, welche von dem Kopfteil 36 abgewandt ist, ist ein Riegelstück 42 als drittes Zylinderstück angeordnet, dessen Durchmesser kleiner ist als der Durchmesser des ersten Führungsstückes 38, jedoch zumindest größer als der halbe Durchmesser des ersten Führungsstückes 38. Außerdem ist das Riegelstück 42 derart exzentrisch an der Stirnfläche des ersten Führungsstückes 38 angeordnet, dass es entlang einer sich parallel zur Längsachse Y erstreckenden Außenlinie des ersten Führungsstückes 38 bündig angeordnet ist. D. h. die Mittelachse des Riegelstückes 42 ist parallel versetzt zu der Längsachse Y des Führungsstückes 38 und des Kopfteils 36. Des Weiteren entspricht die Länge des Riegelstückes 42 mindestens der Breite der Ausformung des Bügels 34 in Richtung der Achse Y normal zur Drehachse X. An der axialen Stirnfläche des Riegelstückes 42, welche vom ersten Führungsstück 38 abgewandt ist, ist als viertes Zylinderstück ein zweites Führungsstück 44 zentrisch zur Längsachse Y von Kopfteil 36 und erstem Führungsstück 38 angeordnet. Der Durchmesser des zweiten Führungsstückes 44 ist dabei so gewählt, dass das zweite Führungsstück 44 an keiner Stelle in radialer Richtung die Außenwandung des Riegelstücks 42 überragt und entlang einer sich parallel zur Längsachse Y erstreckenden Außenlinie Riegelstück 42 und zweites Führungsstück 44 bündig zueinander angeordnet sind.

Eine weitere Ausführungsform des Befestigungsstiftes 24' wie in Fig. 3 dargestellt sieht vor, dass entlang eines zylinderförmigen Kerns 45, vorzugsweise aus Metall, die vier Zylinderstücke, vorzugsweise aus Kunststoff, angeformt sind. Ein solcher Kern mit angeformten Teilen als Befestigungsstift 24' bietet eine hohe Stabilität bzw. eine kostengünstige Herstellung im Vergleich zu einem komplett aus Kunststoff bzw. Metall hergestellten Befestigungsstift 24. In den angeformten Zylinderstücken ist im Vergleich zur Ausführung des Befestigungsstiftes 24 in Fig. 1 keine Nut 40 angeordnet. Am außen liegenden Axialende des Kopfteils 36' ist ein Mitnehmerprofil 47 in Form eines Innensechskantes für ein Werkzeug eingelassen, um den Befestigungsstift 24' um seine Längsachse D drehen zu können. Der Kern 45 erstreckt sich entlang der Längsachse Y und bildet am Axialende des Befestigungsstiftes 24' das zweite Führungsstück 44'.

In einer Drehposition kann der Befestigungsstift 24, 24' durch den Eingriff 22 in die Führung 36 geschoben werden. Der Kopfteil 36 des Befestigungsstiftes 24' ragt in der maximalen Einschiebeposition des Befestigungsstiftes 24' in Richtung der Achse Y nicht mehr aus der Außenkontur bzw. Außenwand 23 des Bodenteils 10 heraus. In genannter maximaler Einschiebestellung befindet sich das Riegelstück 42, 42' komplett in der Öffnung 29 des Bügels 28, 28', 28". Sowohl erstes als auch zweites Führungsstück 38, 44, 44' befinden sich in formschlüssigem Eingriff in der Führung 26. In der gelösten Position, in welcher der Befestigungsstift 24, 24' in die Führung 26 und die Öffnung 29 eingeschoben wird, liegt der bezüglich der Längsachse Y in radialer Richtung am weitesten auskragende Bereich des Riegelstückes 42, 42' abgewandt von der Innenseite der bogenartigen Ausformung 34, 34', 34" des Bügels 28, 28', 28", d. h. dem Statorgehäuse 6 zugewandt. Durch Drehen des Befestigungsstiftes 24, 24' um seine Längsachse Y in eine verriegelnde Position wird das Riegelstück 42' mit dem Bügel 28 verklemmt. Während des Drehens des Befestigungsstiftes 24' dreht sich das exzentrisch angeordnete Riegelstück 42' von einer nicht am Bügel 28 anliegenden Position in eine anliegende, wobei das Riegelstück 42' vorzugsweise an der Scheitellinie der bogenartigen Ausformung 34, 34', 34" an deren Innenseite anliegt. D. h. in dieser Position liegt der am weitesten bezüglich der Drehachse Y radial auskragende Teil des Verriegelungsstückes 42, 42' an der der Öffnung 29 zugewandten Innenseite der Ausformung 34, 34', 34" an. Das Drehen in die anliegende Position kann vorzugsweise auch mit einer Kraftwirkung in Richtung der Längsachse X auf die Fläche der bogenartigen Ausformung 34 einhergehen, die sich über die Verbindung des Bügels 28 mit dem Statorgehäuse 6 sowie durch die Führung des Befestigungsstiftes 24' im Elektronikgehäuse 4 auf Statorgehäuse 6 und Elektronikgehäuse 4 überträgt. Durch die Formung des Bügels 28, wie insbesondere in Fig. 5 und 6 gezeigt, und dessen Materialwahl kann der Bügel 28 vorzugsweise gegenüber der Kraftwirkung eine federnde Wirkung in Richtung der Achse X haben. Das Elektronikgehäuse 4 wird so an das Statorgehäuse 6 durch die von dem Bügel 28, 28', 28" erzeugte elastische Rückstellkraft angedrückt. Bei der Ausführung des Bügels 28" mit einer Ausbuchtung 35 entlang der Scheitellinie der bogenartigen Ausformung 34" ist es vorteilhaft, wenn der Befestigungsstift 24' an seinem Riegelstück 42' eine zu der Ausbuchtung formschlüssige Einbuchtung derart aufweist, dass bei Anlage des Riegelstücks 42' an dem Bügel 28" die Ausbuchtung in die Einbuchtung greift und so eine Rastung bzw. Halterung des Befestigungsstiftes 24' in dieser verriegelten Position bewirkt.

Der seitlich in das Elektronikgehäuse 4 geführte Befestigungsstift 24' bietet den Vorteil, dass im Elektronikgehäuse 4 keine in axialer Richtung X laufenden Befestigungselemente vorhanden sein müssen, die bei der Montage des vormontierten Elektronikgehäuses 4 in das Statorgehäuse 6 durch das Deckelteil 8 des Elektronikgehäuses 4 geführt werden müssen. Das ermöglicht, dass innerhalb des Elektronikgehäuses 4 Teile wie elektrische Bauelemente ohne Rücksicht auf die Befestigungselemente oder deren notwendige Durchführungen unter dem Deckelteil 8 angeordnet werden können. Ebenso ist es möglich, an der axialen Außenseite des Elektronikgehäuses 4 bzw. des Deckelteils 8 Bedien- und / oder Anzeigeelemente ohne Rücksicht auf notwendige Durchführungen für die Befestigungselemente anzuordnen bzw. genannte Bedien- und / oder Anzeigeelemente entsprechend groß gestalten zu können. Dennoch ist hier ein Befestigungselement in Form des Befestigungsstiftes 24, 24', 24" vorgesehen, welcher vollständig innerhalb der Außenkontur des Elektronikgehäuses 4 gelegen ist und dennoch derart von außen zugänglich ist, dass das Elektronikgehäuse 4 im vollständig montierten Zustand mit dem Statorgehäuse 6 verbunden werden kann.'

Bei dem hier gezeigten Ausführungsbeispiel ist an dem Deckelteil 8 im Bereich der Deckfolie 14 ein Display 31 angeordnet. Das Display 31 liegt im Wesentlichen zentral bezüglich der Längsachse X und somit im Bereich der axialen Projektion der Stirnseite des Statorgehäuses 6. Dabei hat das Display 31 eine Größe, dass es in Projektion zumindest den Zentralbereich der axialen Stirnseite des Statorgehäuses 6 überdeckt, im Wesentlichen jedoch einen Großteil der Fläche der axialen Stirnseite des Statorgehäuses 6 und insbesondere den Bereich, an welchem Gewindelöcher 32 in der axialen Stirnseite des Statorgehäuses 6 gelegen sind, überdeckt. Die Gewindelöcher 32 würden zur Befestigung eines herkömmlichen Elektronikgehäuses mittels Schrauben genutzt. Aufgrund der Größe des Displays 31 wäre es hier jedoch nicht möglich, Befestigungselemente durch das Deckelteil 8 hindurch in die Gewindelöcher 32 zu schrauben. Durch die Anordnung des von der Seite her eingeführten Befestigungselementes in Form des Befestigungsstiftes 24 ist dennoch eine sichere Befestigung des Elektronikgehäuses 8 an dem Statorgehäuse 6 möglich.

Der Bügel 28, 28', 28" wird mit seinen Klemmflächen 30 an den Gewindelöchern 32 des Statorgehäuses 6 angeschraubt, welche alternativ auch zur direkten Verschraubung eines Klemmenkastens bzw. Elektronikgehäuses genutzt werden können. D. h. an dieses Statorgehäuse 6 kann auch ein Elektronikgehäuse in herkömmlicher Weise mit Schrauben, welche einen Teil des Elektronikgehäuses, insbesondere dessen Bodenteil durchgreifen, befestigt werden.

### Bezugszeichenliste

- 2: - Pumpenaggregat
- 3: - Pumpengehäuse
- 4: - Elektronikgehäuse
- 5: - Rotor
- 6: - Statorgehäuse
- 7: - Laufrad
- 8: - Deckelteil
- 9: - Stator
- 10: - Bodenteil
- 11: - Zwischenteil
- 12: - Öffnung
- 13: - Schrauben
- 14: - Deckfolie
- 15: - Kabeldurchführung
- 16: - Befestigungshülsen
- 18: - elektrischer Anschluss
- 20: - Leiterplatte
- 21: - Vertiefung
- 22: - Eingriff
- 23: - Außenwand
- 24: - Befestigungsstift
- 24': - Befestigungsstift mit axialem Kern
- 26: - Führung
- 28, 28', 28": - Bügel
- 29: - Öffnung
- 30: - Klemmflächen
- 31: - Display
- 32: - Gewindelöcher
- 33: - Schrauben
- 34, 34' , 34": - bogenartige Ausformung des Bügels
- 35: - konkave Einbuchtung
- 36: - Kopfteil
- 38: - erstes Führungsstück
- 40: - Nut
- 42, 42': - Riegelstück
- 44, 44': - zweites Führungsstück
- 45: - Kern
- 47: - Mitnehmerprofil

- X: - Drehachse des Rotors
- Y: - Längsachse Befestigungsstift

## Patentansprüche

1. Pumpenaggregat mit einem Elektromotor, welcher ein Statorgehäuse (6) und ein außen am Statorgehäuse (6) befestigtes Elektronikgehäuse (4) aufweist, wobei das Statorgehäuse (6) eine sich quer zur Fügerichtung (X), in welcher das Elektronikgehäuse (4) an das Statorgehäuse (6) angesetzt ist, erstreckende Ausnehmung (29) aufweist, das Elektronikgehäuse (4) eine Führung (26) aufweist und dass ein Verriegelungsschieber (24) die Führung (26) und die Ausnehmung (29) durchgreift, **dadurch gekennzeichnet, dass** der Verriegelungsschieber (24), wenn er in die Führung (26) und die Ausnehmung (29) eingesetzt ist, zwischen einer gelösten Position und einer verriegelten Position bewegbar ist, wobei die Ausnehmung (29) und der Verriegelungsschieber (24) so angeordnet sind, dass durch die Bewegung des Verriegelungsschiebers (24) in die Verriegelungsposition eine Bewegung des Elektronikgehäuses (4) in Fügerichtung (X) relativ zu dem Statorgehäuse (6) bewirkt wird und in der verriegelten Position das Elektronikgehäuse (4) mit dem Statorgehäuse (6) verspannt ist.

2. Pumpenaggregat nach Anspruch 1, **dadurch gekennzeichnet, dass** das Elektronikgehäuse (4) axial an dem Statorgehäuse (6) angeordnet ist.

3. Pumpenaggregat nach Anspruch 1 oder 2, **dadurch gekennzeichnet, dass** der Verriegelungsschieber (24), wenn er in die Führung (26) und die Ausnehmung (29) eingesetzt ist, zwischen einer gelösten Position und einer verriegelten Position drehend bewegbar ist.

4. Pumpenaggregat nach einem der vorangehenden Ansprüche, **dadurch gekennzeichnet, dass** der Verriegelungsschieber (24) als Stift ausgebildet ist.

5. Pumpenaggregat nach Anspruch 4, **dadurch gekennzeichnet, dass** zumindest ein erstes axiales Teilstück (42) des Stiftes (24) exzentrisch zu einem zweiten axialen Teilstück (30) ausgebildet ist und der Stift (24) in der Führung (26) drehbar ist.

6. Pumpenaggregat nach Anspruch 5, **dadurch gekennzeichnet, dass** das erste axiale Teilstück (42) in die Ausnehmung (29) im Statorgehäuse (6) und das zweite axiale Teilstück (30) in die Führung (26) im Elektronikgehäuse (4) eingreift.

7. Pumpenaggregat nach Anspruch 5, **dadurch gekennzeichnet, dass** der Stift (24) ein drittes axiales Teilstück (44) aufweist, welches konzentrisch zu dem zweiten axialen Teilstück (30) ausgebildet ist, wobei das erste axiale Teilstück (42) zwischen dem zweiten (30) und dem dritten axialen Teilstück (44) gelegen ist und das dritte axiale Teilstück (44) vorzugsweise in die Führung (26) in dem Elektronikgehäuse (4) eingreift.

8. Pumpenaggregat nach einem der Ansprüche 4 bis 7, **dadurch gekennzeichnet, dass** der Stift (24) ein Gewinde besitzt, welches in ein Gewinde im Elektronikgehäuse (4) eingreift.

9. Pumpenaggregat nach einem der Ansprüche 4 bis 8, **dadurch gekennzeichnet, dass** der Stift (24) in der Führung (26) drehbar ist und vorzugsweise an einem Axialende Eingriffsmittel (47) für zumindest ein Werkzeug aufweist, wobei das Eingriffsmittel (47) vorzugsweise derart ausgestaltet ist, dass es eine Drehmomentübertragung ausschließlich in eine Drehrichtung zulässt.

10. Pumpenaggregat nach einem der Ansprüche 4 bis 9, **dadurch gekennzeichnet, dass** der Stift (24) zumindest in einem axialen Teilstück (42) gegenüber einem angrenzenden axialen Teilstück (30) radial verjüngt ist.

11. Pumpenaggregat nach Anspruch 10, **dadurch gekennzeichnet, dass** der Stift (24) zumindest zwei unterschiedlich radial verjüngte axiale Teilstücke (42, 44) aufweist, wobei ein Teilstück (42) exzentrisch zu dem anderen Teilstück (44) angeordnet ist.

12. Pumpenaggregat nach einem der vorangehenden Ansprüche, **dadurch gekennzeichnet, dass** zwischen Verriegelungsschieber (24) und Elektronikgehäuse (4) an zumindest einer Stelle ein Dichtungsmittel angeordnet ist.

13. Pumpenaggregat nach einem der vorangehenden Ansprüche, **dadurch gekennzeichnet, dass** zumindest ein Arretierungsmittel (35) vorhanden ist, welches den Verriegelungsschieber (24) in der verriegelten Position arretiert, wobei das Arretierungsmittel (35) vorzugsweise zwischen dem Verriegelungsschieber (24) und der Ausnehmung (29) angeordnet ist.

14. Pumpenaggregat nach Anspruch 13, **dadurch gekennzeichnet, dass** der Stift (24) eine Ausnehmung besitzt und vorzugsweise am Rand der Ausnehmung (29) an dem Statorgehäuse (6) ein zu der Ausnehmung des Verriegelungsschiebers (24) formschlüssiger Vorsprung (35) ausgebildet ist.

15. Pumpenaggregat nach einem der vorangehenden Ansprüche, **dadurch gekennzeichnet, dass** die Ausnehmung (29) an dem Statorgehäuse (6) durch ein vorzugsweise aus Blech ausgebildetes Formteil (28) gebildet ist, welches insbesondere über zumindest eine Schraube mit dem Statorgehäuse (6) verbunden ist.

16. Pumpenaggregat nach Anspruch 15, **dadurch gekennzeichnet, dass** das Formteil (28) ein Bügel oder eine Blattfeder ist.

17. Pumpenaggregat nach einem der Ansprüche 15 oder 16, **dadurch gekennzeichnet, dass** das Formteil (28) mindestens einen Knick und/oder eine gebogene Stelle aufweist.

18. Pumpenaggregat nach einem der vorangehenden Ansprüche, **dadurch gekennzeichnet, dass** zumindest eine elektrische Verbindung, insbesondere eine elektrische Steckverbindung, zwischen Statorgehäuse (6) und Elektronikgehäuse (4) vorhanden ist.

19. Pumpenaggregat nach einem der vorangehenden Ansprüche, **dadurch gekennzeichnet, dass** an einer dem Statorgehäuse (6) entgegengesetzten Außenfläche des Elektronikgehäuses (4) ein Bedien- und/oder Anzeigeelement (31) angeordnet ist, welches in Projektion über dem Statorgehäuse (6) gelegen ist.

## Claims

1. A pump assembly with an electric motor which comprises a stator housing (6) and an electronics housing (4) fastened at the outside on the stator housing (6), wherein the stator housing (6) comprises a recess (29) extending transversely to the joining direction (X), in which the electronics housing (4) is applied onto the stator housing (6), the electronics housing (4) comprises a guide (26) and that a locking slide (24) engages through the guide (26) and the recess (29), **characterised in that** the locking slide (24), when it is inserted into the guide (26) and the recess (29), is movable between a released position and a locked position, wherein the recess (29) and the locking slide (24) are arranged such, that a movement of the electronics housing (4) in joining direction (X) relative to the stator housing (6) is caused by movement of the locking slide (24) into the locking position.

2. A pump assembly according to claim 1, **characterised in that** the electronics housing (4) is arranged axially on the stator housing (6).

3. A pump assembly according to claim 1 or 2, **characterised in that** the locking slide (24), when it is inserted into the guide (26) and the recess (29), is movable between a released position and a locked position, in a rotating manner.

4. A pump assembly according to one of the preceding claims, **characterised in that** the locking slide (24) is designed as a pin.

5. A pump assembly according to claim 4, **characterised in that** at least a first axial part-piece (42) of the pin (24) is designed eccentrically to a second axial part-piece (30), and the pin (24) is rotatable in the guide (26).

6. A pump assembly according to claim 5, **characterised in that** the first axial part-piece (42) engages into the recess (29) in the stator housing (6), and the second axial part-piece (30) engages into the guide (26) in the electronics housing (4).

7. A pump assembly according to claim 5, **characterised in that** the pin (24) comprises a third axial part-piece (44) which is designed concentrically to the second axial part-piece (30), wherein the first axial part-piece (42) is situated between the second (30) and the third axial part-piece (44), and the third axial part-piece (44) preferably engages into the guide (26) in the electronics housing (4).

8. A pump assembly according to one of the claims 4 to 7, **characterised in that** the pin (24) has a thread which engages into a thread in the electronics housing (4).

9. A pump assembly according to one of the claims 4 to 8, **characterised in that** the pin (24) is rotatable in the guide (26) and comprises engagement means (47) for at least one tool, preferably at an axial end, wherein the engagement means (47) is preferably designed in a manner such that it permits a torque transmission exclusively in one rotation direction.

10. A pump assembly according to one of the claims 4 to 9, **characterised in that** the pin (24) at least in one axial part-piece (42) is tapered radially with respect to an adjacent axial part-piece (30).

11. A pump assembly according to claim 10, **characterised in that** the pin (24) comprises at least two different radially tapered axial part-pieces (42, 44), wherein one part-piece (42) is arranged eccentrically to the other part-piece (44).

12. A pump assembly according to one of the preceding claims, **characterised in that** a sealing means is arranged at at least one location, between the locking slide (24) and the electronics housing (4).

13. A pump assembly according to one of the preceding claims, **characterised in that** at least one stop means (35) is present, which locks the locking slide (24) in the locked position, wherein the stop means (35) is preferably arranged between the locking slide (24) and the recess (29).

14. A pump assembly according to claim 13, **characterised in that** the pin (24) has a recess, and a projection (35) which has a positive fit with the recess of the locking slide (24) is formed preferably at the edge of the recess (29) on the stator housing (6).

15. A pump assembly according to one of the preceding claims, **characterised in that** the recess (29) is formed on the stator housing (6) by way of a shaped part (28) which is formed preferably from sheet-metal and which is connected in particular via at least one screw, to the stator housing (6).

16. A pump assembly according to claim 15, **characterised in that** the shaped part (28) is a bracket or leaf spring.

17. A pump assembly according to one of the claims 15 or 16, **characterised in that** the shaped part (28) comprises at least one kink and/or bent location.

18. A pump assembly according to one of the preceding claims, **characterised in that** at least one electrical connection, in particular an electric plug connection, is present between the stator housing (6) and the electronics housing (4).

19. A pump assembly according to one of the preceding claims, **characterised in that** an operating element and/or display element (31) which in a projection is situated above the stator housing (6), is arranged on an outer surface of the electronics housing (4) which is opposite to the stator housing (6).

## Revendications

1. Groupe motopompe avec un moteur électrique qui comprend un carter de stator (6) et un boîtier d'électronique (4) fixé à l'extérieur sur le carter de stator (6), le carter de stator (6) comprenant un évidement (29) s'étendant transversalement à la direction d'assemblage (X) dans laquelle le boîtier d'électronique (4) est rapporté au carter de stator (6), le boîtier d'électronique (4) comprenant un guidage (26) et un poussoir de verrouillage (24) traversant le guidage (26) et l'évidement (29), **caractérisé en ce que** le poussoir de verrouillage (24), lorsqu'il est inséré dans le guidage (26) et l'évidement (29), est apte à être déplacé entre une position déverrouillée et une position verrouillée, l'évidement (29) et le poussoir de verrouillage (24) étant disposés de façon telle que, par le déplacement du poussoir de verrouillage (24) dans la position de verrouillage, un mouvement du boîtier d'électronique (4) dans la direction d'assemblage (X) par rapport au carter de stator (6) est causé et que, dans la position verrouillée, le boîtier d'électronique (4) est solidarisé au carter de stator (6).

2. Groupe motopompe selon la revendication 1, **caractérisé en ce que** le boîtier d'électronique (4) est disposé axialement sur le carter de stator (6).

3. Groupe motopompe selon la revendication 1 ou 2, **caractérisé en ce que** le poussoir de verrouillage (24), lorsqu'il est inséré dans le guidage (26) et l'évidement (29), est apte à être déplacé par rotation entre une position déverrouillée et une position verrouillée.

4. Groupe motopompe selon l'une des revendications précédentes, **caractérisé en ce que** le poussoir de verrouillage (24) présente la forme d'une tige.

5. Groupe motopompe selon la revendication 4, **caractérisé en ce qu'**au moins une première partie axiale (42) de la tige (24) est formée de façon excentrique par rapport à une deuxième partie axiale (30) et que la tige (24) est apte à être tournée dans le guidage (26).

6. Groupe motopompe selon la revendication 5, **caractérisé en ce que** la première partie axiale (42) s'engage dans l'évidement (29) au carter de stator (6) et que la deuxième partie axiale (30) s'engage dans le guidage (26) au boîtier d'électronique (4).

7. Groupe motopompe selon la revendication 5, **caractérisé en ce que** la tige (24) comprend une troisième partie axiale (44) qui présente une forme concentrique à la deuxième partie axiale (30), la première partie axiale (42) étant située entre la deuxième (30) et la troisième (44) parties axiales et que la troisième partie axiale (44) s'engage de préférence dans le guidage (26) dans le boîtier d'électronique (4).

8. Groupe motopompe selon l'une des revendications 4 à 7, **caractérisé en ce que** la tige (24) comprend un filetage qui s'engage dans un filetage dans le boîtier d'électronique (4).

9. Groupe motopompe selon l'une des revendications 4 à 8, **caractérisé en ce que** la tige (24) est apte à être tournée dans le guidage (26) et de préférence comporte à une extrémité axiale un moyen d'engagement (47) pour au moins un outil, le moyen d'engagement (47) étant de préférence formé de façon qu'il admet une transmission de couple uniquement dans un sens de rotation.

10. Groupe motopompe selon l'une des revendications 4 à 9, **caractérisé en ce que** la tige (24) se rétrécit radialement au moins dans une partie axiale (42) par rapport à une partie axiale attenante (30).

11. Groupe motopompe selon la revendication 10, **caractérisé en ce que** la tige (24) comporte au moins deux parties axiales (42, 44) différentes radialement rétrécies, une partie (42) étant disposée de manière excentrique par rapport à l'autre partie (44).

12. Groupe motopompe selon l'une des revendications précédentes, **caractérisé en ce que**, entre le poussoir de verrouillage (24) et le boîtier d'électronique (4), à au moins un endroit, un moyen d'étanchéité est disposé.

13. Groupe motopompe selon l'une des revendications précédentes, **caractérisé en ce qu'**au moins un moyen d'arrêt (35) est présent qui arrête le poussoir de verrouillage (24) dans la position verrouillée, le moyen d'arrêt (35) étant disposé de préférence entre le poussoir de verrouillage (24) et l'évidement (29).

14. Groupe motopompe selon la revendication 13, **caractérisé en ce que** la tige (24) comprend un évidement et que, de préférence au bord de l'évidement (29) au carter de stator (6), une avancée (35) est formée en complémentarité de forme avec l'évidement du poussoir de verrouillage (24).

15. Groupe motopompe selon l'une des revendications précédentes, **caractérisé en ce que** l'évidement (29) au carter de stator (6) est constitué de préférence par une pièce de forme (28) formée en tôle, qui est attachée au carter de stator (6) en particulier par au moins une vis.

16. Groupe motopompe selon la revendication 15, **caractérisé en ce que** la pièce de forme (28) est un arceau ou un ressort à lame.

17. Groupe motopompe selon l'une des revendications 15 ou 16, **caractérisé en ce que** la pièce de forme (28) comprend au moins un endroit plié et/ou cintré.

18. Groupe motopompe selon l'une des revendications précédentes, **caractérisé en ce qu'**il existe au moins une connexion électrique, notamment une connexion électrique enfichable, entre le carter de stator (6) et le boîtier d'électronique (4).

19. Groupe motopompe selon l'une des revendications précédentes, **caractérisé en ce que**, sur une surface extérieure du boîtier d'électronique (4) éloignée du carter de stator (6), un élément de commande et/ou d'affichage (31) est disposé qui est situé, en projection, au-dessus du carter de stator (6).
